# EUROPEAN PATENT SPECIFICATION

(11) **EP 2 514 388 B1**
(45) Date of publication and mention of the grant of the patent: **15.03.2017**
(21) Application number: 10856899.9
(22) Date of filing: 10.12.2010
(51) Int. Cl.: A61C 7/12, A61C 7/16, A61C 7/14

(54) **UNIVERSAL LINGUAL BRACKET SYSTEM**
UNIVERSELLES ZAHNKLAMMERNSYSTEM
SYSTÈME DE BRACKETS LINGUAUX UNIVERSELS

(30) Priority: 10.09.2010 CN 201010280649
(43) Date of publication of application: 24.10.2012
(73) Proprietor: Guangzhou Riton Biomaterial Co., Ltd., Guangzhou, Guangdong 510380 (CN)
(72) Inventor: HUANG, Weihong, Guangzhou, Guangdong 510380 (CN); LIN, Jiuxiang, Guangzhou, Guangdong 510380 (CN); WANG, Hongwei, Guangzhou, Guangdong 510380 (CN); LI, Zu'an, Guangzhou, Guangdong 510380 (CN); KONG, Weidong, Guangzhou, Guangdong 510380 (CN)
(74) Representative: Hooiveld, Arjen Jan Winfried
(86) International application number: PCT/CN2010/079642
(87) International publication number: WO 2012/031437

(56) References cited:
- WO-A1-97/00051
- WO-A1-97/00051
- CN-A- 101 756 753
- CN-Y- 2 240 337
- CN-Y- 2 601 083
- CN-Y- 201 223 458
- US-A- 5 230 619
- US-A- 5 230 619
- US-B1- 6 394 798

## Description

### FIELD OF THE INVENTION

The present invention relates to a lingual bracket system, more particularly to a universal lingual bracket system.

### BACKGROUND OF THE INVENTION

In orthodontic treatment, in order to solve the problems that labial portions do not looks nice and patients feel uncomfortable, lingual appliances are frequently used, especially universal lingual appliances with high compatibility. A universal lingual appliance is composed of a universal lingual bracket system, an archwire and an elastic pressure ring. The universal lingual bracket system comprises different types of universal lingual brackets, which are made according to different dental patterns, i.e. different universal lingual brackets for different tooth number. Teeth are classified with different numbers, for example, central incisor (i.e. incisor) is tooth No. 1, the second molar is tooth No. 7, and so forth. Accordingly, the universal lingual brackets are also numbered from 1-7. A universal lingual bracket includes a base plate and a bracket body portion as a whole. The base plate is abutted with the lingual tooth surface and the abutted surface is disposed with a mesh bottom. Generally, the bracket body portion is provided with a slot, a crimpable hook and a tie wing. The archwire is embedded into the slot of the universal lingual bracket to connect all the universal lingual brackets, and then used to tie the tie wing at the No. 7 universal lingual bracket. Since the universal lingual brackets are tightly against the lingual teeth surfaces and connected by the archwire in series, the original tooth type can be gradually corrected into the intended tooth type under the interaction force between the archwire and the slot. In order to tie the tie wing, the dentist firstly hangs the lower portion of the elastic pressure ring on the guiding groove, then places the probe on the upper end of the tie wing, and finally uses the front end of the probe to move the upper portion of the elastic pressure ring around the tie wing, allowing the elastic pressure ring to surround the middle portion between the crimpable hook and the tie wing to fasten the universal lingual bracket on the archwire. Conventionally, a rough universal lingual bracket is firstly made and then the separately produced mesh bottom is welded on the base plate. Because it is two parts that are welded together, the mesh bottom is likely to be separated from the universal lingual bracket. The separated mesh bottom is easy to be damaged to make the universal lingual bracket unable to be used normally. Therefore the durability of the universal lingual brackets is low. With respect to a conventional universal lingual bracket system, when the elastic pressure ring is used to fasten the tie wing on teeth No. 1-3, the probe does not have the support point due to the structure and position of the teeth No. 1-3. The probe is likely to slide when the elastic pressure ring is moved and the fastening process will be difficult. In addition, the conventional universal lingual bracket system is easy to be accurately fastened when it is installed on teeth No. 6 and 7. However, when it is installed on teeth No. 1-5, the positioning will become difficult and the tooth correction result will be less satisfactory under the interaction force between the archwire and the slot because of the shorter slot and the shorter contact length after the archwire is assembled to the No. 1-5 universal lingual brackets.

Document WO97/00051 discloses a bracket with a mesh bonding surface.

### SUMMARY OF THE INVENTION

The invention is as claimed in claim 1.

J In view of the above-described problems, it is one objective of the invention to provide a universal lingual bracket system, which has the advantages that the mesh bottom is unlike to come off and the installation is secure and convenient.

The technical solution of the invention is as follows:
A universal lingual bracket system, in accordance with the invention, comprises seven universal lingual brackets No. 1-7 in series by an archwire and the lingual bracket includes a base plate and a bracket body portion that are integrated as a whole. A mesh bottom is arranged on the abutted surface formed between the base plate and the lingual tooth surface, and the mesh bottom is integrally molded with the base plate.

As a further preferred embodiment, the mesh bottom is in the structure of an interlaced woven wire.

As a further preferred embodiment, the mesh bottom is integrally molded with the base plate. As a further preferred embodiment, the base plate includes a crimpable hook, located at the teeth root in the mounted position;
at least one tie wing, disposed on the No. 1-6 universal lingual brackets and located at the crown in the mounted position;
and a slot, disposed on the bracket body portion and in the No. 1-6 universal lingual brackets, located between the crimpable hook and the tie wing as well as in the No. 7 lingual bracket, and directly passes through the bracket body portion to form a square channel.

As a further preferred embodiment, the end of the tie wing is disposed with a guiding groove. As a further preferred embodiment, the guiding groove is an arc-shaped recess and only disposed on the tie wing of the No. 1-3 universal lingual brackets.

As a further preferred embodiment, the length of the slot on the No. 1-5 universal lingual brackets is larger than the width of the corresponding tie wing.

As a further preferred embodiment, the No. 1-5 universal lingual brackets each has one tie wing while the No. 6 universal lingual bracket has two tie wings that are parallel at the same side.

As a further preferred embodiment, an auxiliary tie wing is disposed aside the crimpable hook of the No. 6 universal lingual bracket.

Advantages of the invention are summarized below: the mesh bottom, the base plate and the bracket body portion are integrally molded and the mesh bottom is in the structure of an interlaced woven wire, so that the universal lingual brackets have strong capability to be against the teeth surfaces and they are unlikely to come off. Even if they come off, they will not damage the mesh bottom. In addition, the mesh bottom can be used again once it is treated by sandblasting. The present invention allows the universal lingual brackets to be securely and conveniently installed with high durability, therefore it is applicable to various universal lingual appliances.

Additionally, a guiding groove is disposed on the No. 1-3 universal lingual brackets, thus the probe has a support point when the elastic pressure ring is moved and it is easier to fasten the tie wing. The slot of the No. 1-5 universal lingual brackets is lengthened; therefore, after the archwire is assembled to the universal lingual brackets, their contact length is prolonged and then it is easier for positioning. Apart from that, the tooth correction result will be more satisfactory.

### BRIEF DESCRIPTION OF THE DRAWINGS

The present invention is explained in further detail below with reference to the attached drawings and embodiment.
FIG. **1** is an axonometric diagram of No. **1-3** universal lingual brackets of the invention;
FIG. **2** is an axonometric diagram of No. **4-5** universal lingual brackets of the invention;
FIG. **3** is an axonometric diagram of No. **6** universal lingual bracket of the invention;
FIG. **4** is an axonometric diagram of No. **7** universal lingual bracket of the invention; and
FIG. **5** is a structural representation of a mesh bottom of the invention.

### DETAILED DESCRIPTION OF THE EMBODIMENTS

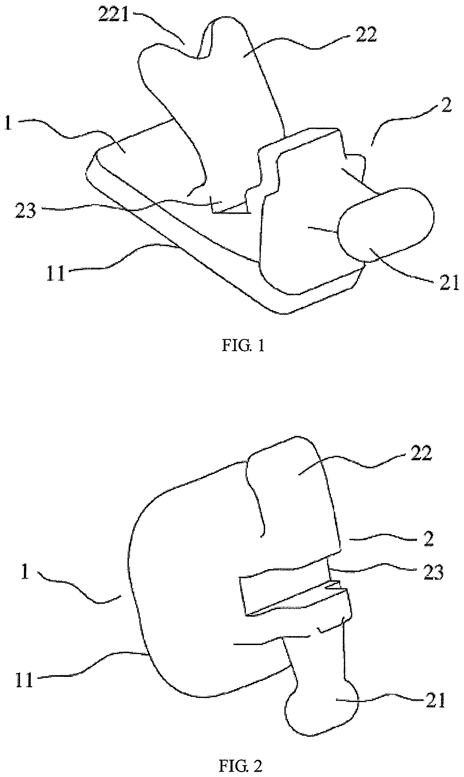

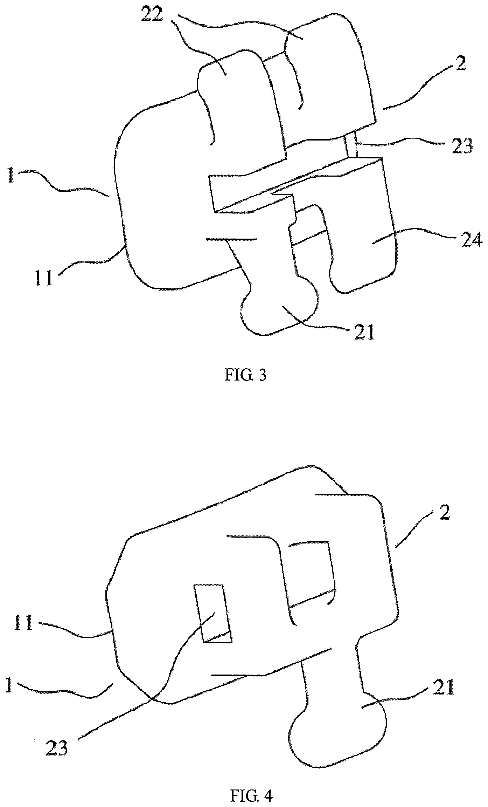

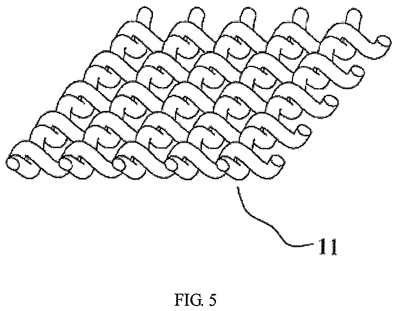

As shown in FIGS. **1-5**, a universal lingual bracket system, a universal lingual bracket system, in accordance with the invention, comprises No. **1-7** universal lingual brackets connected in series by an archwire. The lingual bracket includes a base plate **1** and a bracket body portion **2** that are integrated as a whole. A mesh bottom **11** is arranged on the abutted surface formed between the base plate **1** and the lingual tooth surface, and the mesh bottom **11** is integrally molded with the base plate **1**.

As a further preferred embodiment, the mesh bottom **11** is in the structure of an interlaced woven wire.

As a further preferred embodiment, the mesh bottom **11** is integrally molded with the base plate 1. Specifically, the universal lingual bracket is firstly designed in CAD software with a 3D digital model, then it is made into a resin model by means of DLP digital projection technology and finally it is made by investment casting. In fact, the mesh bottom **11** is drawn on the base plate **1** in CAD or assembled with the base plate together. The wire diameter of the mesh bottom **11** is 0.05-1 mm and the mesh number thereof is 20-200.

As a further preferred embodiment, the base plate **1** includes a crimpable hook **21**, located at the teeth root in the mounted position; at least one tie wing **22**, disposed on the No. **1-6** universal lingual brackets and located at the crown in the mounted position;
and a slot **23**, disposed on the bracket body portion **2** and in the No. **1-6** universal lingual brackets, located between the crimpable hook **21** and the tie wing **22** as well as in the No. **7** lingual bracket, and directly passes through the bracket body portion **2** to form a square channel.

As a further preferred embodiment, the end of the tie wing **22** is disposed with a guiding groove **221**.

As a further preferred embodiment, the guiding groove **221** is an arc-shaped recess with 1-10 mm arc radius and 0.5-2 mm arc length and only disposed on the tie wing **22** of the No. **1-3** universal lingual brackets.

As a further preferred embodiment, the length of the slot **23** on the No. **1-5** universal lingual brackets is larger than the width of the corresponding tie wing **22**. The length of the slot **23** on the No. **1-5** universal lingual brackets is 1.2-3.2 mm and the width of the tie wing **22** is 0.8-2.0 mm.

As a further preferred embodiment, the No. **1-5** universal lingual brackets each has one tie wing **22** while the No. **6** universal lingual bracket has two tie wings **22** that are parallel at the same side.

As a further preferred embodiment, an auxiliary tie wing **24** is disposed aside the crimpable hook **21** of the **No. 6** universal lingual bracket.

When to assemble the lingual appliance, each universal lingual bracket is firstly pressed against the corresponding lingual tooth surface, then have the archwire embedded into the slot **23**, allow the archwire directly pass through the slot **23** with respect to the No.**7** universal lingual bracket, and finally assemble elastic pressure rings to fix the whole appliance. When to install the elastic pressure ring on No. **1-3** universal lingual brackets, one end of the elastic pressure ring is firstly hanged on the crimpable hook **21**, use a probe to hold the elastic pressure ring, use the guiding groove **221** as the support point to rotate the probe to make the other end of the elastic pressure ring to pass around the tie wing, and then loose the probe, the elastic pressure ring will automatically fasten the universal lingual brackets with the archwire. When to install the elastic pressure ring on the No. **6** universal lingual bracket, the auxiliary tie wing **24** has to be fastened with the tie wing **22** together.

The aforementioned embodiment is only a preferred example of the invention and shall not be used to restrict the invention. It will be obvious to those skilled in the art to make changes and modifications without departing from the invention in its broader aspects and all changes and modifications are deemed to be within the applied scope of the invention.

## Claims

1. A universal lingual bracket system, comprising:
Seven universal lingual brackets No. 1-7 corresponding to different teeth and connected in series by an archwire,
the lingual bracket includes a base plate (1) and a bracket body portion (2) that are integrated as a whole,
wherein a mesh bottom (11) is arranged on the abutted surface formed between the base plate and the lingual tooth surface, **characterized in that**
the mesh bottom (11) is integrally molded with the base plate (1).

2. The universal lingual bracket system of claim 1, wherein the mesh bottom (11) is in the structure of an interlaced woven wire.

3. The universal lingual bracket system of claims 1 or 2, wherein the mesh bottom (11) is integrally molded with the base plate (1) through investment casting.

4. The universal lingual bracket system of claim 1, wherein the base plate (1) including:
a crimpable hook (21), located at the teeth root in the mounted position;
at least one tie wing (22), disposed on the No. 1-6 universal lingual brackets and located at the crown in the mounted position;
a slot (23), disposed on the bracket body portion (2) and in the No. 1-6 universal lingual brackets, located between the crimpable hook (21) and the tie wing (22) as well as in the No. 7 lingual bracket, and directly passes through the bracket body portion (2) to form a square channel.

5. The universal lingual bracket system of claim 4, wherein the end of the tie wing (22) is disposed with a guiding groove (221).

6. The universal lingual bracket system of claim 5, wherein the guiding groove (221) is an arc-shaped recess and only disposed on the tie wing (22) of the No. 1-3 universal lingual brackets.

7. The universal lingual bracket system of claims 4, 5 or 6, wherein the length of the slot (23) on the No. 1-5 universal lingual brackets is larger than the width of the corresponding tie wing (22).

8. The universal lingual bracket system of claims 4, 5 or 6, wherein the No. 1-5 universal lingual brackets each has one tie wing (22) while the No. 6 universal lingual bracket has two tie wings (22) that are parallel at the same side.

9. The universal lingual bracket system of claim 7, wherein the No. 1-5 universal lingual brackets each has one tie wing (22) while the No. 6 universal lingual bracket has two tie wings (22) that are parallel at the same side.

10. The universal lingual bracket system of claim 4, wherein an auxiliary tie wing (24) is disposed aside the crimpable hook (21) of the No. 6 universal lingual bracket.

## Patentansprüche

1. Ein universelles Lingualbefestigungsteil-System, aufweisend:
Sieben universelle Lingualbefestigungsteile Nr. 1-7, welche mit unterschiedlichen Zähnen korrespondieren und mittels eines Drahtbogens in Reihe verbunden sind,
wobei das Lingualbefestigungsteil eine Grundplatte (1) und einen Befestigungsteilkörperabschnitt (2), welche als ein Ganzes integriert sind, aufweist,
wobei ein Netzboden (11) an der Anlagefläche, die zwischen der Grundplatte und der lingualen Zahnfläche gebildet ist, angeordnet ist, **dadurch gekennzeichnet, dass**
der Netzboden (11) mit der Grundplatte (1) integral geformt ist.

2. Das universelle Lingualbefestigungsteil-System des Anspruchs 1, wobei der Netzboden (11) in der Struktur eines gekreuzten, gewebten Drahts ist.

3. Das universelle Lingualbefestigungsteil-System des Anspruchs 1 oder 2, wobei der Netzboden (11) mit der Grundplatte (1) mittels Präzisionsgießens integral geformt ist.

4. Das universelle Lingualbefestigungsteil-System des Anspruchs 1, wobei die Grundplatte (1) aufweist:
einen crimpbaren Haken (21), welcher in der Montiert-Position an der Zahnwurzel angeordnet ist;
wenigstens einen Verbindungsflügel (22), welcher an den universellen Lingualbefestigungsteilen Nr. 1-6 angeordnet ist und in der Montiert-Position an der Krone angeordnet ist;
einen Schlitz (23), welcher an dem Befestigungsteilkörperabschnitt (2) und in den universellen Lingualbefestigungsteilen Nr. 1-6 angeordnet ist, zwischen dem crimpbaren Haken (21) und dem Verbindungsflügel (22) sowie in dem Lingualbefestigungsteil Nr. 7 angeordnet ist und direkt durch den Befestigungsteilkörperabschnitt (2) hindurch verläuft, um einen rechteckigen Kanal zu bilden.

5. Das universelle Lingualbefestigungsteil-System des Anspruchs 4, wobei das Ende des Verbindungsflügels (22) über eine Führungsnut (221) verfügt.

6. Das universelle Lingualbefestigungsteil-System des Anspruchs 5, wobei die Führungsnut (221) eine bogenförmige Vertiefung ist und nur an dem Verbindungsflügel (22) der universellen Lingualbefestigungsteile Nr. 1-3 angeordnet ist.

7. Das universelle Lingualbefestigungsteil-System von Anspruch 4, 5 oder 6, wobei die Länge des Schlitzes (23) an den universellen Lingualbefestigungsteilen Nr. 1-5 größer ist als die Breite des korrespondierenden Verbindungsflügels (22).

8. Das universelle Lingualbefestigungsteil-System von Anspruch 4, 5 oder 6, wobei die universellen Lingualbefestigungsteile Nr. 1-5 jeweilig einen Verbindungsflügel (22) aufweisen, während das universelle Lingualbefestigungsteil Nr. 6 zwei Verbindungsflügel (22), die parallel sind, an derselben Seite aufweist.

9. Das universelle Lingualbefestigungsteil-System des Anspruchs 7, wobei die universellen Lingualbefestigungsteile Nr. 1-5 jeweilig einen Verbindungsflügel (22) aufweisen, während das universelle Lingualbefestigungsteil Nr. 6 zwei Verbindungsflügel (22), die parallel sind, an derselben Seite aufweist.

10. Das universelle Lingualbefestigungsteil-System des Anspruchs 4, wobei ein Hilfsverbindungsflügel (24) neben dem crimpbaren Haken (21) des universellen Lingualbefestigungsteils Nr. 6 angeordnet ist.

## Revendications

1. Système de support lingual universel, comprenant :
sept supports linguaux universels n°1 à 7 correspondant à différentes dents et reliés en série au moyen d'un arc dentaire,
le support lingual comprenant une plaque de base (1) et une partie de corps de support (2) qui sont intégrés d'un seul tenant,
dans lequel un fond à maillage (11) est disposé sur la surface en butée formée entre la plaque de base et la face linguale des dents, **caractérisé en ce que**
le fond à maillage (11) est intégralement moulé avec la plaque de base (1).

2. Système de support lingual universel selon la revendication 1, dans lequel le fond à maillage (11) se trouve dans la structure d'un fil métallique tissé entrelacé.

3. Système de support lingual universel selon les revendications 1 ou 2, dans lequel le fond à maillage (11) est intégralement moulé avec la plaque de base (1) grâce à un moulage de précision.

4. Système de support lingual universel selon la revendication 1, dans lequel la plaque de base (1) comprend :
un crochet sertissable (21), situé dans la racine dentaire en position montée ;
au moins une ailette (22), placée sur les supports linguaux universels n°1 à 6 et située au niveau de la couronne en position montée ;
une fente (23), placée sur la partie de corps de support (2) et dans les supports linguaux universels n°1 à 6, entre le crochet sertissable (21) et l'ailette (22), et dans le support lingual n°7, et qui traverse directement la partie de corps de support (2) afin de former un canal carré.

5. Système de support lingual universel selon la revendication 4, dans lequel l'extrémité de l'ailette (22) est prévue avec une rainure de guidage (221).

6. Système de support lingual universel selon la revendication 5, dans lequel la rainure de guidage (221) est un renfoncement en forme d'arc et est disposée uniquement sur l'ailette (22) des supports linguaux universels n°1 à 3.

7. Système de support lingual universel selon les revendications 4, 5 ou 6, dans lequel la longueur de la fente (23) sur les supports linguaux universels n°1 à 5 est supérieure à la largeur de l'ailette correspondante (22).

8. Système de support lingual universel selon les revendications 4, 5 ou 6, dans lequel les supports linguaux universels n°1 à 5 possèdent chacun une ailette (22), tandis que le support lingual universel n°6 possède deux ailettes (22) qui sont parallèles du même côté.

9. Système de support lingual universel selon la revendication 7, dans lequel les supports linguaux universels n°1 à 5 possèdent chacun une ailette (22), tandis que le support lingual universel n°6 possède deux ailettes (22) qui sont parallèles du même côté.

10. Système de support lingual universel selon la revendication 4, dans lequel une ailette auxiliaire (24) est placée à côté du crochet sertissable (21) du support lingual universel n°6.
